# EUROPEAN PATENT APPLICATION

(11) **EP 1 372 090 A1**
(43) Date of publication of application: **17.12.2003**
(21) Application number: 02012979.7
(22) Date of filing: 12.06.2002
(51) Int. Cl.: G06F 17/60

(54) **Position budgeting and control system**

(71) Applicant: SAP Aktiengesellschaft, 69190 Walldorf (DE)
(72) Inventor: Unser, Nicole, 69226 Nussloch (DE); Peichl, Andy, 76698 Ubstadt-Weiher OT Zeutern (DE)
(74) Representative: Hössle, Markus, Dipl.-Phys.

(57) **Abstract**

The invention provides for a position budgeting and control system (10) as well as for a method and a computer program for evaluating and controlling human resource budgets by retrieving human resource relevant data from a data base (20) and evaluating a human resource budget for a given human resource object for a predefined period of time on the basis of said retrieved data, storing the result of said evaluation and monitoring said budget during said predefined period of time.

## Description

### Technical Field

The technical field of this invention is in the area of electronic data processing. More particularly, the invention relates to methods, computer program products and systems for evaluating human resource budgets and controlling human resource budgets.

### Background

Private companies as well as the public sector use automated systems in order to manage their human resources tasks, particularly payroll management. The human resource data administration includes a data base with personnel data comprising information relative to employees such as employee number, position, salary, possible benefits (gratuities, bonus payments, stock options etc.) salary history, pension information etc. On the basis of this data, the system periodically (weekly, monthly) provides payroll data by creating a payroll printout for the employee and an according payment order. Some systems comprise interfaces that provide the payroll data to an accountancy system.

In such conventional systems, employees are paid on the basis of periodically calculated salaries. Sometimes, there are additional payments, such as benefits, or increases in salary. In other cases, a new position is created in a company or a department which results in additional commitments and thus money. In some of these cases, the money needed for additional commitments is not available any more. This, however, will only become apparent at the end of the year when payments cannot be effected or money has to be retrieved from other budgets.

### Summary

It is therefore an object of the invention to provide for a system and a method which permit to avoid to exceed available budgets for human resource commitments.

The present invention provides a position budgeting and control system which allows for a complete human resource budget preparation for a defined period of time, e.g. the upcoming fiscal year, as well as control and surveillance of the budget management during this given period of time. The system according to the invention evaluates the costs for each position in a company or public authority and specifies the budget for each position for the upcoming fiscal year. This results in the reservation of a budget for a certain position in such a manner that the amount reserved in the budget cannot be spent for other purposes during said fiscal year.

According to the invention, the evaluation and the reservation of a budget is done in a two step manner. The first step consists in retrieving data base information on various types of human resource positions in the company or the public authority, respectively. In a second step, when evaluating an individual budget and payroll scenario for a certain employee occupying a given position, additional data base information on the employee is retrieved. The system according to the invention thus comprises first data base means containing position data and second data base means containing human resource data.

The data contained in both data base means are retrieved and collected by a commitment engine. The commitment engine comprises an administrator module, an object collector module and a data collector module. The administrator module is the commitment engine's interface for communication with other hardware means like data base means, input/output means, and the like, and controls the data flow through the object collector and data collector modules. The object collector modules retrieves requested objects and, the case given, also retrieves depending objects. The object collector also retrieves data for the interval time periods after which new data collection is to be performed and encumbrances are to be calculated. The object collector module further performs an object check on all the objects.

Advantageously, the commitment engine further comprises a creator module for creating budget control documents, an error handling module for handling errors and triggering workflows to overcome an error, and a transfer module for transferring budget data to exterior accountancy, said administrator module administering data flow to and from said creator, said error handling and said transfer modules. These modules are further described below.

The data collector module retrieves data base data for positions on the one hand and data base data for persons/employees (human resource objects) on the other hand. The data collector module also provides for an update of the salary data for all relevant objects. The data collector module further provides for payroll simulation or payroll calculation, respectively, as well as data collection in connection with personnel cost planning.

As stated above, the commitment engine preferably comprises a creator module, said creator module creating commitment documents. These documents serve as a basis for the reservation of funds in accounting, financial management and/or controlling. All payments, i.e. salary payments, are calculated on the basis of these commitment documents.

As also stated above, the commitment engine preferably comprises a transfer module, said transfer module transferring relevant payroll data to an accounting module, the latter being preferably separate from the commitment engine. The term accounting module comprises the functionalities of accounting, financial management and controlling.

Further the commitment engine preferably also comprises said error handling and clean up module for evaluating whether an object table contains an error and the case given, for triggering an error handling workflow.

Changes in the data base data are automatically recognised by the commitment engine and the budget is recalculated and adapted. In case the new budget extends beyond the former budget, an error workflow is triggered.

Thus, the invention provides for a system which allows an overview on and reservation of salary budgets for a period of time, i.e. a given fiscal year, and prevents that more money is spent on salaries and positions than available. The system provides for budget management in connection with conventional human resource data bases and, preferably, in connection with budget preparation.

### Description of the Drawings

The detailed description will refer to the following drawing figures in which like reference numerals refer to like objects. It is understood that the description is in no way limitative to the scope of the present invention and merely is an illustration of a preferred embodiment of the invention. Also, the described combination of the features of the invention is not be understood as a limitation, and all the features can be combined in other constellations without departing from the spirit of the invention. In the drawings,
FIG. 1 is a schematic view of a computer position budgeting and control system according to the invention.
FIG. 2 is a more detailed view of the commitment engine of the computer system of FIG. 1.

### Detailed Description

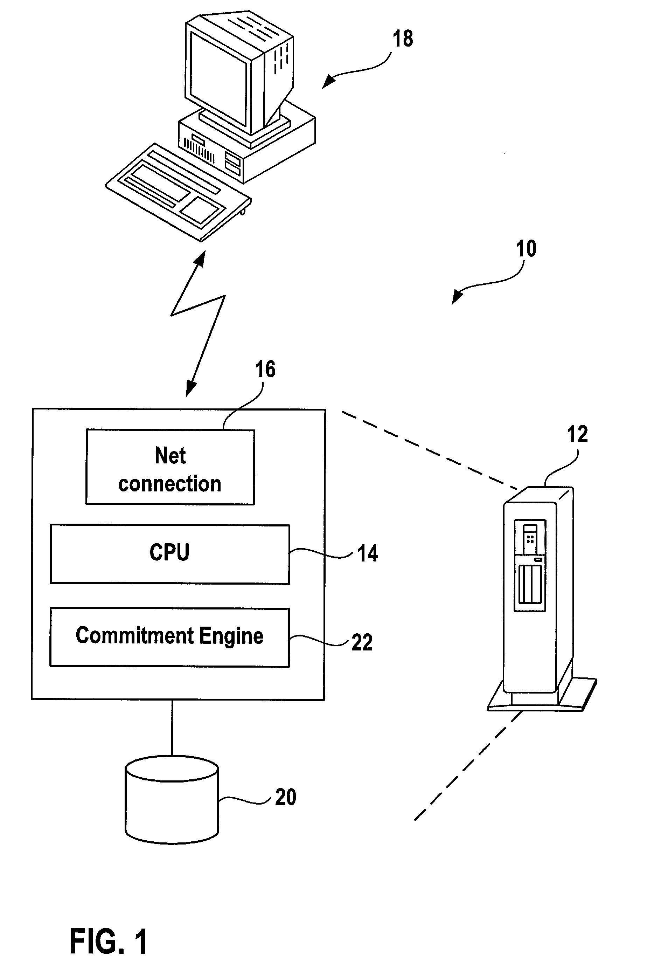

Figure 1 shows a computer position budgeting and control system 10 according to the present invention. Computer system 10 comprises a server 12 with a central processing unit CPU 14, a net connection 16 for connection with at least one input/output means 18, at least one data base means 20 containing human resource data relating to human resource objects. The position budgeting and control system 10 of the invention further comprises a commitment engine 22.

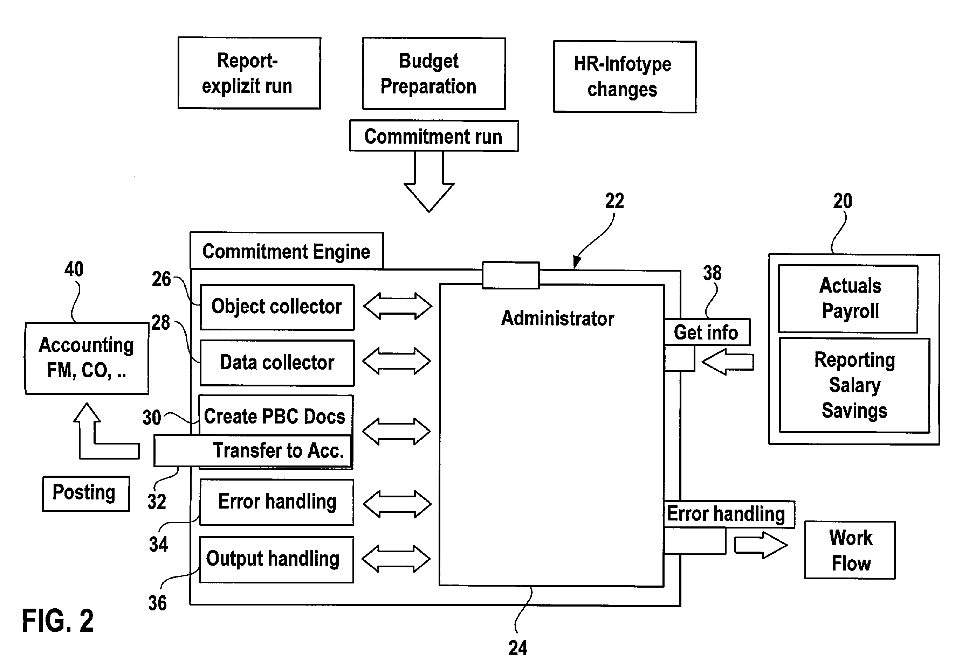

Referring now to FIG. 2, the commitment engine 22 is described in more detail. The commitment engine 2 comprises an administrator module 24, an object collector module 26, a data collector module 28, a creator module 30, a transfer module 32, an error handling module 34 and an output handling module 36. The administrator module 24 administers all data flow to and from said other commitment engine modules.

Particularly, the administrator module 24 retrieves various form of data at 38, e.g. data from the human resource data base 20 relating to human resource objects. This data relates to payroll data or salary savings data for a given human resource object.

The object collector module 26 retrieves, through the administrator module 24, requested human resource objects from data base 20. The object collector module 26 also retrieves data of objects depending on the retrieved requested object. Further data collected by the object collector module 26 are the intervals for a new data collection and encumbrances.

The data collector module 28 retrieves human resource data corresponding to the human resource object retrieved by the object collector module 26, including salary and benefit payment data. The data collector module 28 also provides for payroll simulation upon request and performs data collection with personal cost planning and rates the collected data with personal cost planning, and finally saves the results (through administrator module 24).

The creator module 30, based on the results delivered by data collector module 28, creates commitment documents (or Position Budget Control (PBC) documents), which commitment documents form the basis for the reservation of funds in accounting 40. The transfer of the documents to accounting (financial management FM, controlling CO) 40 is done through transfer module 32.

The error handling module 34 recognizes an error by evaluating data of a human resource object provided by the object collector and data collector modules 26, 28, which data is preferably provided as object table. If an error is found by error handling module 34, the error handling module 34 triggers a workflow through administrator module 24 in order to launch a clean up process.

Operation of the computer system according of the invention is as follows.

When planning the next fiscal period, i.e. the next fiscal year, certain positions and an according budget are approved. For the preparation of the budget, positions are defined and human resource objects, i.e. persons, holding certain positions are defined. During this budget preparation, changes to human resource data might occur (cf infotype changes in FIG. 1). This budget plan specifies the approved positions for the upcoming fiscal year and how they are financed.

On the basis of this budget plan, a first commitment run is performed with the commitment engine. In this run, the commitment engine 22 reserves the approved budget for the approved positions for the time period chosen, e.g. the nest fiscal year. It also creates the encumbrances for the positions and persons. This means that the invention not only provides for a method to calculate funds needed for a given human resource planning, but also to fixedly reserve the corresponding budget by creating the according encumbrances. The budget and the encumbrances are automatically created and forwarded to accounting modules 40.

The invention also provides for automatic update and adjustment by continuously repeating commitment runs of the commitment engine throughout the given time period. A commitment run is therefore performed after changes in the human resource data that are relevant to the salary, which changes are discovered by the data object collector and data collector modules 26, 28. Such changes are manually input into the human resource data base, but are usually not (or only after a delay) reported to management levels that are responsible for budget controlling. With the invention, such changes are discovered immediately by continuous screening and comparing of data. After discovering such a relevant change, the commitment engine automatically launches a commitment run, calculating any differences occurring to the budget reservation due to the human resource data change. A great advantage of the invention therefore is that data which could hitherto only be used by certain persons because it was classified sensitive data is now used without time delay in a highly efficient automated manner, thus providing implications due to changes to these data immediately to accounting modules in which the changes can be analyzed and considered.

During the set period of time, the commitment engine also performs commitment runs after each payroll creation and reduces the encumbrance reservations accordingly.

Preferably, the calculation and reservation of funds is done in three steps, namely a reservation step, a pre-commitment step and a commitment step. In the reservation step, calculation is performed on the basis of the budget preparation result only for a position. The result of this calculation is adapted after a budget preparation run for this position. In the pre-commitment step, calculation is performed only for vacant and for occupied positions, under consideration of the according data sources for vacant positions and occupied positions, and a simulation for the fiscal year's costs is performed. The result of this pre-commitment step might affect the result of the first reservation step and adaptation might become necessary. In the commitment step, the system calculates needed funds in connection with persons only. Calculation is performed on the basis of human resource data sets and a payroll simulation is performed. Again, the result of this step might affect result of the prior pre-commitment step and adaptation might become necessary. The results of the two latter steps need to be adapted when changes to the according data sets for positions and/or human resource objects occur.

The "chain" of proceeding thus is to first calculate a pre-commitment and then a commitment, the latter forming the basis for a reservation of encumbrances in accounting. However, the reserved funds are continuously compared to what the actual development, i.e. to the effected salary payments and to changes in the data sets, e.g. occupation of a hitherto vacant position, raise for a certain human resource object etc. If comparison shows that the budget is not in line with reality (or vice versa), the evaluation needs to be adapted. In case this leads to an error, e.g. to a budget overflow, an error workflow is triggered via error handling module 34. Due to the continuos comparison and payroll simulation, changes which would lead to overdrawing the budget are discovered well in advance and can be remedied.

An error workflow as mentioned above consists in outputting a detailed message through output handling module 36 and administrator module 24 to an authorized person, preferably an executive personal manager. In this message, a detailed reasoning for error occurrence together with a proposed workflow for remedy is given. Advantageously, the error handling module investigates as to the responsible department for the error that occurred, e.g. the human resource department, the payroll department, the accounting department or the administrator of the commitment engine. It also investigates which departments need to assist in removing/repairing the cause for the error. According to the findings of the error handling module, a workflow is generated that involves one or more of the departments mentioned above.

When the error occurs, the error handling module sets the according set of data to an error status, e.g. "E". As soon as the cause of the error has been removed, i.e. the authorized departments/managers have given clearance and approval, the error handling module sets the set of data to an approved status, e.g. "A", and adaptation of the funds reservation status can be initialized.

## Claims

1. A position budgeting and control system for evaluating and controlling human resource budgets, comprising:
- a central processing unit (14) ;
- input/output means (18) ;
- at least one data base means (20) containing human resource data relating to human resource objects;
- a commitment engine (22) ;
- said commitment engine (22) having means for retrieving human resource relevant data from said at least one data base means (20) and for evaluating a human resource budget for a given human resource object for a predefined period of time on the basis of said retrieved data, said commitment engine (22) further having means for storing the result of said evaluation and for monitoring said budget during said predefined period of time.

2. The system according to claim 1, wherein said commitment engine (22) comprises an administrator module (24), an object collector module (26) and a data collector module (28), said administrator module (24) being connected to said object collector module (26) and said data collector module (28), said administrator module (24) having means for administering data flow to and from said object and data collector modules (26, 28), said object collector module (26) having means for retrieving objects from said at least one data base means (20) and said data collector means (28) having means for collecting data from said at least one data base means (20) and for writing updated human resource data to said at least one data base means (20).

3. The system according to claim 1 or 2, said commitment engine (22) further comprising a creator module (30) for creating budget control documents, an error handling module (34) for handling errors and triggering workflows to overcome an error, and a transfer module (32) for transferring budget data to exterior accountancy (40), said administrator module (24) having means for administering data flow to and from said creator, said error handling and said transfer modules (30, 34, 32).

4. The system according to claim 2 or 3, wherein said human resource data consists of position data and individual employee data.

5. The system according to one of the claims 2 to 4, wherein said commitment engine (22) comprises means for calculating individual employee salary on the basis of said retrieved data.

6. The system according to claim 5, wherein said commitment engine (22) comprises means for calculating said individual employee salary for said predefined period of time as a budget and monitors said budget during said period of time.

7. The system according to claim 6, wherein said commitment engine (22) comprises means for combining several of said individual employee salary budgets into a department or cost center budget.

8. The system according to claim 7, wherein said commitment engine (22) comprises means for monitoring said department or cost center budget during said period of time.

9. The system according to one of the claims 6 to 8, wherein said monitoring involves a comparison of said calculated budget with actually effected salary payments.

10. The system according to one of the claims 4 to 9, wherein said commitment engine (22) comprises means for calculating position cost simulations for employee positions on the basis of said position data for said predefined period of time, the sum of said position cost simulations being the potential position budget for an employer entity or sub-entity for said predefined period of time.

11. The system according to one of the claims 4 to 10, wherein said commitment engine (22) comprises means for calculating employee cost simulations for an existing employee on the basis of said individual employee data for said predefined period of time, the sum of said employee cost simulations being the actual employee budget for an employer entity or sub-entity for said predefined period of time.

12. The system according to claim 10 and 11, wherein said commitment engine (22) comprises means for indicating for a hiring decision regarding hiring of new personnel on the basis of the difference between said potential position budget and said actual employee budget.

13. The system according to one of the claims 4 to 12, wherein said commitment engine (22) comprises means for automatically recognizing changes to said human resource data that are relevant to said budget and re-evaluates said budget.

14. A method for evaluating and controlling human resource budgets, comprising:
retrieving human resource relevant data and evaluating a human resource budget for a given human resource object for a predefined period of time on the basis of said retrieved data, and
storing and monitoring said budget during said predefined period of time.

15. A method according to claim 14, further comprising:
reserving funds according to said evaluated human resource data.

16. A method according to claim 15, further comprising:
continuously adapting said reserved funds by subtracting effected salary payments.

17. A method according to one of the claims 14 to 16, further comprising:
on the basis of a budget preparation, performing a reservation step for a human resource position only, then performing a pre-commitment step for occupied and vacant human resource positions only on the basis of retrieved specific position data, and then performing a commitment step for human resource objects only on the basis of retrieved specific object data, and subsequent adaptation of the results of the respective prior steps.

18. A method according to claim 17, further comprising:
reserving funds for said predefined period of time on the basis of said commitment step.

19. A method according to claim 17 or 18, further comprising:
continuous adaptation of the results of said pre-commitment and commitment steps based on changes to said human resource position data.

20. A method according to one of claims 17 to 19, further comprising:
continuous adaptation of the results of said pre-commitment and commitment steps based on changes to said human resource object data.

21. A computer program product for evaluating and controlling human resource budgets embodied by a computer readable medium, the computer program product comprising instructions to cause a processor of a computer to execute the following steps:
retrieving human resource relevant data and evaluating a human resource budget for a given human resource object for a predefined period of time on the basis of said retrieved data, and
storing and monitoring said budget during said predefined period of time.

22. A computer program product according to claim 21, further comprising instructions for:
reserving funds according to said evaluated human resource data.

23. A computer program product according to claim 22, further comprising instructions for:
continuously adapting said reserved funds by subtracting effected salary payments.

24. A computer program product according to one of the claims 21 to 23, further comprising instructions for:
on the basis of a budget preparation, performing a reservation step for a human resource position only, then performing a pre-commitment step for occupied and vacant human resource positions only on the basis of retrieved specific position data, and then performing a commitment step for human resource objects only on the basis of retrieved specific object data, and subsequent adaptation of the results of the respective prior steps.

25. A computer program product according to claim 24, further comprising instructions for:
reserving funds for said predefined period of time on the basis of said commitment step.

26. A computer program product according to claim 24 or 25, further comprising instructions for:
continuous adaptation of the results of said pre-commitment and commitment steps based on changes to said human resource position data.

27. A computer program product according to one of the claims 24 to 26, further comprising instructions for:
continuously adapting the results of said pre-commitment and commitment steps based on changes to said human resource object data.

28. A computer program comprising computer program code means to perform a method according to one of the claims 13 to 20 if run on a computer.
